(19) **Europäisches Patentamt / European Patent Office / Office européen des brevets**

(11) **EP 4 643 710 A1**

(12) **EUROPEAN PATENT APPLICATION**
published in accordance with Art. 153(4) EPC

(43) Date of publication:
05.11.2025 Bulletin 2025/45

(21) Application number: 23911591.8

(22) Date of filing: 06.12.2023

(51) International Patent Classification (IPC):
$A46B\ 15/00^{(2006.01)}$    $A61C\ 19/06^{(2006.01)}$

(52) Cooperative Patent Classification (CPC):
A46B 15/00; A61C 19/06

(86) International application number:
PCT/JP2023/043620

(87) International publication number:
WO 2024/142810 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.12.2022 JP 2022210757

(71) Applicant: Sunstar Suisse SA
1163 Etoy (CH)

(72) Inventors:
• INOUE, Masaharu
Takatsuki-shi, Osaka 569-1195 (JP)

• SHIMIZU, Sato
Takatsuki-shi, Osaka 569-1195 (JP)
• NAKANISHI, Takashi
Takatsuki-shi, Osaka 569-1195 (JP)
• OTA, Anri
Takatsuki-shi, Osaka 569-1195 (JP)
• KANATA, Takeshi
Takatsuki-shi, Osaka 569-1195 (JP)

(74) Representative: Plasseraud IP
104 Rue de Richelieu
CS92104
75080 Paris Cedex 02 (FR)

(54) **EVALUATION DEVICE, EVALUATION METHOD, EVALUATION MODEL GENERATION METHOD, AND EVALUATION PROGRAM**

(57)  Provided are an evaluation device and others which are capable of properly evaluating a brushing technique for removing plaque. An evaluation device (1) includes: an index value calculating section (102) for calculating an index value indicative of largeness of brushing from acceleration data indicative of the acceleration of a toothbrush when a subject brushes his or her teeth; and a technique evaluation section (104) for calculating, with use of an evaluation model (111) for a brushing technique, an evaluation value for a brushing technique of the subject from the index value calculated by the index value calculating section (102), the evaluation model (111) being generated on the basis of a correlation between the index value and a plaque removal ratio.

EP 4 643 710 A1

Fig. 1

EVALUATION DEVICE — 1

CONTROL SECTION — 10

- COMMUNICATION SECTION — 12
- INFORMATION ACQUISITION SECTION — 101
- INDEX VALUE CALCULATING SECTION — 102
- INPUT SECTION — 13
- TYPE IDENTIFICATION SECTION — 103
- TECHNIQUE EVALUATION SECTION — 104
- DISPLAY SECTION — 14
- TIME EVALUATION SECTION — 105
- BRUSHING PRESSURE EVALUATION SECTION — 106
- ANGLE EVALUATION SECTION — 107
- OVERALL EVALUATION SECTION — 108
- DISPLAY CONTROL SECTION — 109

STORAGE SECTION — 11

- EVALUATION MODEL — 111
- BRUSHING PRESSURE EVALUATION MODEL — 112
- ANGLE EVALUATION MODEL — 113

**Description**

Technical Field

The present invention relates to an evaluation device and others for evaluating tooth brushing.

Background Art

Techniques for evaluating tooth brushing practiced by a subject and providing feedback on the quality of the tooth brushing have conventionally been known. For example, Patent Literature 1 below discloses using, for tooth brushing, a toothbrush which incorporates an acceleration sensor. Further, Patent Literature 1 discloses evaluating brushing at a certain tooth surface portion through the analysis of an output signal of the acceleration sensor to identify a brushing cycle at said portion and the comparison between the number of brushing cycles and a reference value which is set for said portion.

Citation List

[Patent Literature]

[Patent Literature 1]
Japanese Translation of PCT International Application, Tokuhyo, No. 2013-536018

Summary of Invention

Technical Problem

The technique disclosed in Patent Literature 1 is understood to be based on the assumption that as long as the number of brushing cycles is equal to or greater than the reference value, sufficient brushing is achieved. However, in fact, even for the same number of movements of a toothbrush, difference in brushing technique can cause difference in brushing effects. For example, when the case of moving a toothbrush in large motions is compared with the case of moving the toothbrush in small motions, plaque tends to remain in interdental portions, portions between teeth and gums, and the like in the former case. The plaque in such portions can cause dental caries and periodontal disease.
As above, with the conventional technique described above, there is a problem of an inability to evaluate a brushing technique for removing plaque. An object of an aspect of the present invention is to provide an evaluation device and others which are capable of evaluating a brushing technique for removing plaque.

Solution to Problem

In order to solve the above problem, an evaluation device in accordance with an aspect of the present invention includes: an index value calculating section for calculating an index value indicative of largeness of brushing from acceleration data of a toothbrush when a subject brushes his or her teeth; and a technique evaluation section for calculating, with use of an evaluation model for a brushing technique, an evaluation value for a brushing technique of the subject from the index value calculated by the index value calculating section, the evaluation model being generated on a basis of a correlation between the index value and a plaque removal ratio.
In order to solve the above problem, an evaluation method in accordance with an aspect of the present invention is an evaluation method carried out by one or more information processing devices, and the evaluation method includes: an index value calculating step of calculating an index value indicative of largeness of brushing from acceleration data indicative of acceleration of a toothbrush when a subject brushes his or her teeth; and a technique evaluation step of calculating, with use of an evaluation model for a brushing technique, an evaluation value for a brushing technique of the subject from the index value calculated in the index value calculating step, the evaluation model being generated on a basis of a correlation between the index value and a plaque removal ratio.
In order to solve the above problem, an evaluation model generation method in accordance with an aspect of the present invention is an evaluation model generation method carried out by one or more information processing devices, and the evaluation model generation method includes: a formulation step of formulating a correlation between an index value indicative of largeness of brushing and a plaque removal ratio for the brushing, the index value being calculated from acceleration data indicative of acceleration of a toothbrush in tooth brushing; and a model generation step of generating, on a basis of a function obtained by the formulating, an evaluation model for calculating an evaluation value for a brushing technique from the index value.

The evaluation devices in accordance with the aspects of the present invention may be provided by a computer. In that case, an evaluation device control program for causing a computer to operate as the sections (software elements) of the evaluation devices and thereby providing the evaluation devices via the computer and a computer-readable recording medium which has recorded thereon such an evaluation device control program are within the scope of the present invention.

Advantageous Effects of Invention

With an aspect of the present invention, it is possible to provide an evaluation device and others which are capable of evaluating a brushing technique for removing plaque.

Brief Description of Drawings

Fig. 1 is a block diagram illustrating an example configuration of the main part of an evaluation device in accordance with an embodiment of the present invention.
Fig. 2 is a diagram illustrating an example configuration of an evaluation system which includes the evaluation device.
Fig. 3 is a block diagram illustrating an example configuration of the main part of a model generation device included in the evaluation system.
Fig. 4 is a diagram in which 4001 indicates a relationship between an index value and a plaque removal ratio and 4002 indicates an example of an evaluation model.
Fig. 5 is a diagram in which 5001 indicates a relationship between an index value and a plaque removal ratio for a toothbrush different in type from the toothbrush in 4001 and 5002 indicates another example of the evaluation model.
Fig. 6 is a flowchart illustrating an example of processing for generating the evaluation model.
Fig. 7 is a diagram of an example of a brushing pressure evaluation model.
Fig. 8 is a representation of an example of an angle evaluation model.
Fig. 9 is a representation of another example of the angle evaluation model.
Fig. 10 is a flowchart illustrating example processing for calculating an evaluation value for a brushing technique.

Description of Embodiments

[Configuration of evaluation system]

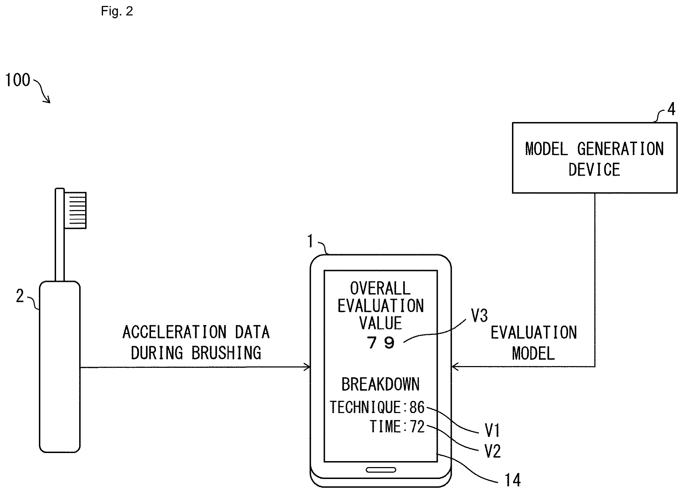

The configuration of an evaluation system 100 in accordance with an embodiment of the present invention is described here on the basis of Fig. 2. Fig. 2 is a diagram illustrating an example configuration of the evaluation system 100, which includes an evaluation device 1. The evaluation system 100 has the function of evaluating a brushing technique in tooth brushing practiced by a subject with use of a toothbrush 2 (hereinafter, simply referred to as brushing technique). The evaluation system 100 includes an evaluation device 1, the toothbrush 2, and a model generation device 4, as illustrated in Fig. 2. The toothbrush 2 includes an acceleration sensor, etc. (not illustrated), and sends sensing data during brushing to the evaluation device 1.

The toothbrush 2 may be an electric toothbrush having a brush portion that is provided with bristles and that is electrically moved, or may be a manual toothbrush with which a user manually brushes the teeth. Further, the portion in which a sensor and the like are incorporated and the brush portion may be configured to be attachable to and detachable from each other. In this case, it is possible to replace a worn-out brush portion while maintaining functions of the toothbrush 2 such as sensing and communicating.

Conventionally, it has been impossible to evaluate a brushing technique for removing plaque which can cause dental caries and periodontal disease. To address this, the inventors of the present application conducted experiments to study the relationship between the largeness of brushing and a plaque removal ratio, and found that when the largeness of brushing is in a specific range, the plaque removal ratio increases, i.e., there is a correlation between the largeness of brushing and the plaque removal ratio.

The evaluation system 100 uses the sensing data during brushing to evaluate a brushing technique via an evaluation model 111 generated on the basis of said correlation. This makes it possible in the evaluation system 100 to evaluate a brushing technique for removing plaque.

The result of evaluation of a brushing technique may be displayed on, for example, a display section 14 included in the evaluation device 1. In the example of Fig. 2, not only an evaluation value V1 for a brushing technique is displayed on the display section 14 but an evaluation value V2 for brushing time and an overall evaluation value V3 are also displayed on the display section 14. The evaluation value for brushing time and the overall evaluation value will be described later in detail.

[Configuration of model generation device]

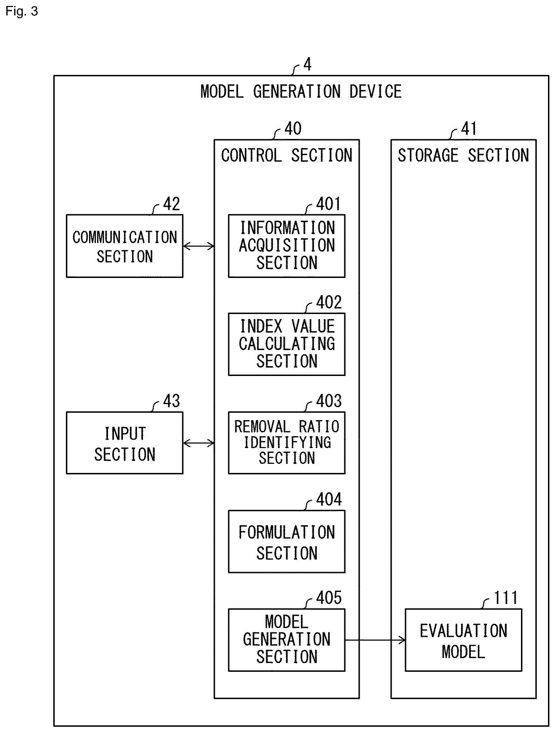

The model generation device 4 is described here on the basis of Fig. 3. The model generation device 4 generates the evaluation model 111. The evaluation model 111 is a brushing technique evaluation model generated on the basis of the correlation between the index value and the plaque removal ratio, and as described above, the evaluation device 1 uses the evaluation model 111 to calculate the evaluation value for a brushing technique. The model generation device 4 includes a control section 40, a storage section 41, a communication section 42, and an input section 43.

The control section 40 performs overall control of the sections of the model generation device 4. As an example, the control section 40 may be a central processing unit (CPU). The control section 40 retrieves a control program, which is software stored in the storage section 41, and loads the control program into a memory such as a random access memory (RAM) to execute various functions. The configuration of the control section 40 will be described later in detail.

The storage section 41 stores various kinds of data to be used by the model generation device 4. For example, in the storage section 41, the evaluation model 111 generated by the model generation device 4 is stored. The evaluation model 111 may be generated for each of the toothbrushes of different types. In this case, the evaluation models 111 which are different from one toothbrush type to another are stored in the storage section 41.

The communication section 42 is a section via which the model generation device 4 communicates with another device. For example, the model generation device 4 can transmit the evaluation model **111** to the evaluation device 1 via the communication section 42. Note that the evaluation model **111** does not need to necessarily be supplied to the evaluation device 1 by communications. For example, the evaluation model 111 may be stored in the evaluation device 1 before shipment of the evaluation device 1.

The input section 43 receives inputs of the various kinds of data to the model generation device 4. For example, the various kinds of data necessary for the generation of the evaluation model 111 may be inputted via the input section 43. Said data may be acquired via the communication section 42.

[Configuration of control section]

The control section 40 includes an information acquisition section 401, an index value calculating section 402, a removal ratio identifying section 403, a formulation section 404, and a model generation section 405.

The information acquisition section 401 acquires the various kinds of data necessary for generation of the evaluation model 111. The various kinds of data includes sensing data measured during brushing with respect to a plurality of test subjects and a plaque removal ratio in said brushing.

The index value calculating section 402 calculates, for each test subject, an index value indicative of the largeness of brushing of the test subject. When the largeness of brushing is too great, plaque tends to remain in interdental portions, portions between teeth and gums, and the like. Thus, the above index value is suitable as the index value for evaluating a brushing technique for removing plaque. The largeness of brushing translates to the degree of smallness of motions of the brushing.

The index value only needs to indicate the largeness of brushing or the degree of smallness of motions of the brushing, and a method for calculating thereof is not particularly limited. For example, in a case of providing a triaxial acceleration sensor in a toothbrush used by a test subject to measure acceleration data during brushing, the information acquisition section 401 may acquire said acceleration data, and the index value calculating section 402 may use said acceleration data to calculate an index value.

In a case of using the acceleration data to calculate an index value, the index value calculating section 402 may use the length of the resultant vector of acceleration obtained by combining pieces of acceleration data on the three axes, to calculate the index value. Said length of the resultant vector is represented by Formula 1 below. Note that the terms x_filtered, y_filtered, and z_filtered in Formula 1 are obtained by removing gravitational acceleration components from the respective acceleration components in the x-, y-, and z-axis directions orthogonal to each other.

$$\begin{array}{c}\text{Length of}\\\text{resultant vector}\\\text{of acceleration}\end{array} = \sqrt{(x\_filtered)^2+(y\_filtered)^2+(z\_filtered)^2} \quad \cdots \text{(Formula 1)}$$

In this case, for example, the index value calculating section 402 may identify, from time-series acceleration data from when a test subject starts brushing to when the test subject ends the brushing, a period during which a single reciprocating action of a toothbrush is performed or a period during which brushing at a specific portion is performed, and calculate said length of the resultant vector from the average value of the axial components of the acceleration in said period, to determine the calculated length of the resultant vector as the index value.

The removal ratio identifying section 403 identifies the plaque removal ratio which corresponds to the index calculated by the index value calculating section 402. In a case where the information acquisition section 401 acquires information indicative of the plaque removal ratio of each test subject, the removal ratio identifying section 403 may use said information to identify the plaque removal ratio which corresponds to the index value calculated by the index value calculating section 402.

The information acquisition section 401 may acquire an inspection result of information regarding the attachment of plaque for each test subject after brushing. In this case, the removal ratio identifying section 403 may calculate the plaque removal ratio from the inspection result.

A calculation method by which the plaque removal ratio identified by the removal ratio identifying section 403 is calculated is not particularly limited. For example, said plaque removal ratio may be calculated with use of PCR (O'Leary's plaque control record) 6 points method. In the PCR 6 points method, each side of any tooth surface under test is divided into three portions, which are mesial, central, and distal portions. For example, in a case of a person who has 28 teeth in the full mouth, (the number of tooth surfaces under test in the full mouth) = 28 × 3 × 2 = 168. The PCR value indicative of the proportion, to these areas, of areas to which plaque is attached is then calculated, and the proportion, to the PCR value before brushing, of the difference between the PCR values before and after the brushing is determined as the plaque removal ratio.

That is, PCR (%) = (the number of tooth surfaces to which plaque is attached / the number of tooth surfaces under test) × 100. For example, in a case where among 100 areas to which plaque is attached before brushing, plaque is attached to 50 areas even after the brushing, PCR = (50/100) × 100 = 50 (%).

The plaque removal ratio is defined as follows: the plaque removal ratio (%) = 100 × {(PCR before brushing - PCR after brushing) / (PCR before brushing)}. For example, in a case where the PCR before brushing is 50% and the PCR after the brushing is 20%, the plaque removal ratio is 100 × (50 - 20) / 50 = 60 (%).

The calculation of the plaque removal ratio is not limited to the above PCR 6 points method, and any index may be used. For example, the PCR 4 points method, the modified PCR method, the oral hygiene index (OHI), the modified Quingley-Hein plaque index (QHI), etc. may be used for the calculation of the plaque removal ratio.

For example, the removal ratio identifying section 403 may identify, as the plaque removal ratio corresponding to an index value calculated by the index value calculating section 402, the average value of the plaque removal ratios in the full mouth in the brushing during which the acceleration data on which the index value is based is measured.

The formulation section 404 formulates a correlation between the index value in brushing by the test subject and the plaque removal ratio for said brushing. As described above, since the index value is calculated by the index value calculating section 402 and the plaque removal ratio is identified by the removal ratio identifying section 403, the formulation section 404 only need to formulate the relationship between the index value and the plaque removal ratio.

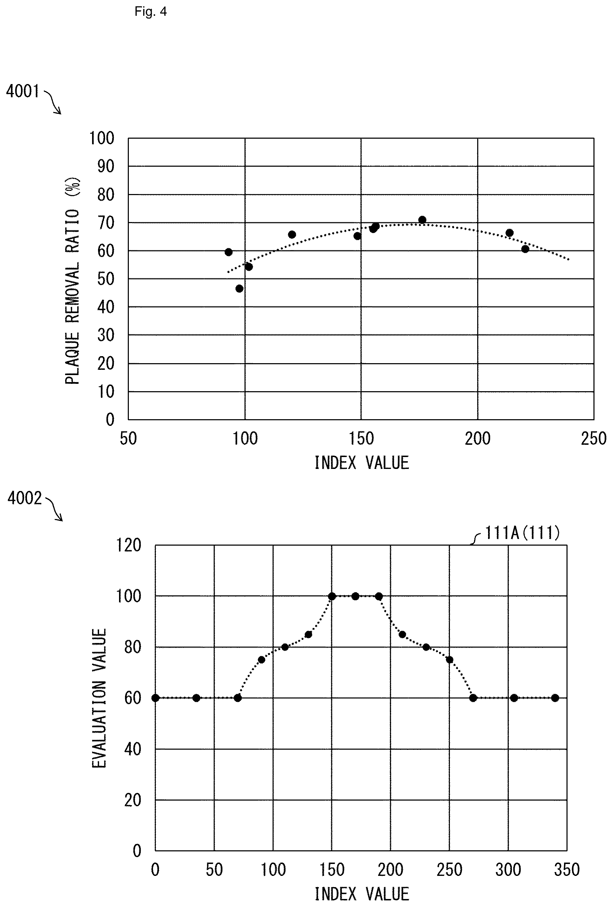

The reference sign 4001 of Fig. 4 is a diagram indicating a relationship between the index value and the plaque removal ratio. The points in 4001 of Fig. 4 indicate the index values and the plaque removal ratios calculated for respective test subjects. The inventors of the present invention found that the relationship between the index values and the plaque removal ratios is convex in the positive direction of the y axis, as illustrated in 4001 of Fig. 4.

The formulation section 404 formulates such a relationship. For example, the formulation section 404 may approximate said relationship with a quadratic function. When approximated with a quadratic function, the points illustrated in 4001 of Fig. 4 are formulated in the formula: $y = -0.0027x^2 + 0.9307x - 10.517$

On the basis of the function obtained by the formulation, the model generation section 405 generates the evaluation model 111 for calculating an evaluation value for a brushing technique from the index value calculated during tooth brushing to be evaluated.

The reference sign 4002 of Fig. 4 indicates an evaluation model 111A generated on the basis of the relationship between the index values and the plaque removal ratios illustrated in 4001 of Fig. 4. The evaluation model 111A is an example of the evaluation model 111. In the evaluation model 111A, when the index value falls within the range of 150 to 200, the evaluation value for a brushing technique is a score of 100 points, which is the highest point, the evaluation value is lower when the index value deviates from said range to a greater degree, and the evaluation value is a score of 60 points when the index value is not more than 70 and when the index value is not less than 270.

In a case of generating such an evaluation model 111A, the model generation section 405 may use, for example, a function generated by the formulation section 404 to identify a range of index values which corresponds to the plaque removal ratios equal to or greater than a first threshold TH1, and generate a formula in which an evaluation value that corresponds to an index value falling within said range is the maximum value (e.g., 100 points). Subsequently, the model generation section 405 may identify a range of index values which corresponds to the plaque removal ratios smaller than a second threshold TH2 (TH2 < TH1), and generate a formula in which an evaluation value that corresponds to an index value falling within said range is the minimum value (e.g., 60 points). The model generation section 405 may then establish a formula in which the evaluation value monotonically decreases from the maximum value to the minimum value in the other ranges. This enables the model generation section 405 to generate, as the evaluation model 111, the formula as illustrated in the graph in 4002 of Fig. 4.

The formulation method is not limited to the above example. For example, the model generation section 405 may generate the evaluation model 111 for converting, into an evaluation value, a y-coordinate value (plaque removal ratio) of a function obtained through the formulation by the formulation section 404. For example, the model generation section 405 may generate the evaluation model 111 for performing conversion into an evaluation value by multiplying, by n (n > 0), the value calculated via a function obtained through the formulation by the formulation section 404, so that an evaluation value is the maximum value when a y-coordinate value of the function obtained through the formulation by the formulation section 404 is the maximum value. In this case, when a function obtained through the formulation by the formulation section 404 is $y = -0.0027x^2 + 0.9307x - 10.517$, the evaluation model is (evaluation value) = $n(-0.0027x^2 + 0.9307x - 10.517)$.

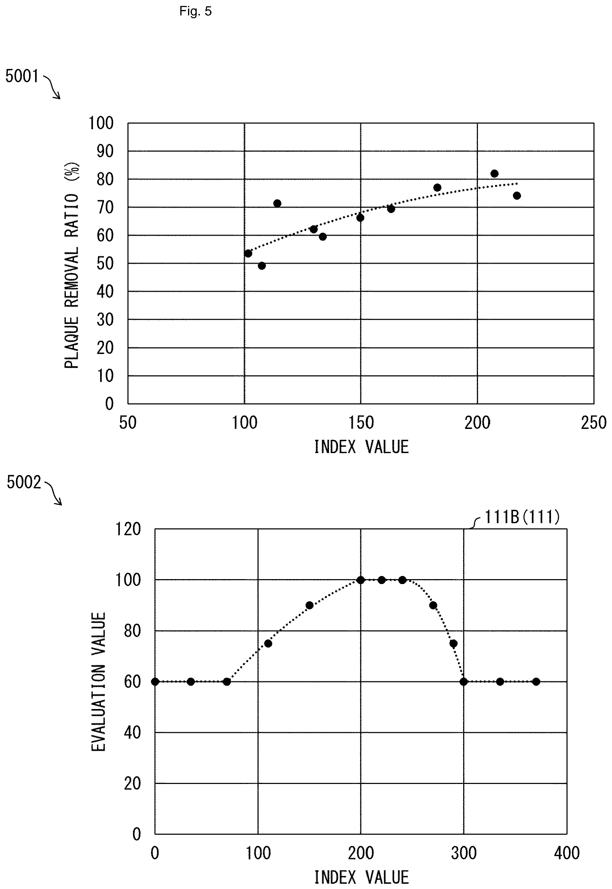

The relationship between the index values and the plaque removal ratios can vary according to, for example, the type of toothbrush used. The reference sign 5001 of Fig. 5 is a diagram indicating the relationship between the index values and the plaque removal ratios for the case of using a toothbrush different from that for 4001 of Fig. 4, and the reference sign 5002 of Fig. 5 indicates an evaluation model 111B which is based on the relationship between the index values illustrated in 5001 and evaluation values. More specifically, the difference in the type of toothbrush is the difference in at least one selected from the group consisting of: the pattern in which bristles are provided; filament material; filament diameter; the length of the bristles; the shape of the ends of the bristles; the thickness of the mount at a head; the shape of the head; the number of the bristles; and the like.

As can be seen by comparing 4001 of Fig. 4 and 5001 of Fig. 5, the relationship between the largeness of brushing and the plaque removal ratio can vary according to the type of toothbrush used. For example, the relationship illustrated in 5001 of Fig. 5 is formulated by the formulation section 404, as $y = -0.0011x^2 + 0.5722x - 7.972$.

In the evaluation model 111B illustrated in 5002 of Fig. 5, the decrease rate of the evaluation value is set to be great in the index value range of not less than 240, and the evaluation value is set to the minimum value (60 points) in the index value range of not less than 300. In this setting, the damage to gums caused by brushing is taken into consideration. That is, in a case where the relationship between the index values indicative of the largeness of brushing and the plaque removal ratios is such that the plaque removal ratios are high even in the range in which brushing is considerably large, as in 5001 of Fig. 5, when this relationship is directly reflected in the evaluation model, there is a possibility that even brushing which is so vigorous that gums are damaged is highly evaluated. As such, in the evaluation model 111B, an evaluation value is low in the range in which the index value are high, as described above, in order not to encourage brushing which is so vigorous that gums are damaged.

As above, the model generation section 405 may generate the evaluation model 111B in which an evaluation value decreases as the index value increases, in the range in which the index value is equal to or greater than a predetermined value. In the model generation section 405, this decrease rate may be set to be greater than the rate at which the evaluation value decreases with the decrease in the index value in the range in which the index value is equal to or smaller than a predetermined value. This makes it possible to generate the evaluation model 111B that is capable of outputting a high evaluation value for brushing performed in the range in which gums are not damaged and outputting a low evaluation value for brushing so vigorous that gums are damaged, and thereby encouraging brushing performed in the range in which gums are not damaged.

The model generation device 4 may generate in advance the evaluation models 111 corresponding to the type of toothbrush, such as the evaluation models 111A and 111B illustrated in Fig. 4 and Fig. 5, and provide the evaluation models to the evaluation device 1. This makes it possible for the evaluation device 1 to apply the evaluation model 111 corresponding to the type of the toothbrush 2 used by the subject of evaluation, to calculate a reasonable evaluation value. When the type of the toothbrush 2 used by the subject of evaluation is changed, the evaluation device 1 may acquire, from the model generation device 4, an evaluation model 111 corresponding to the type of the new toothbrush 2. In this case, a similar effect is obtained.

(Processing flow (evaluation model generation method))

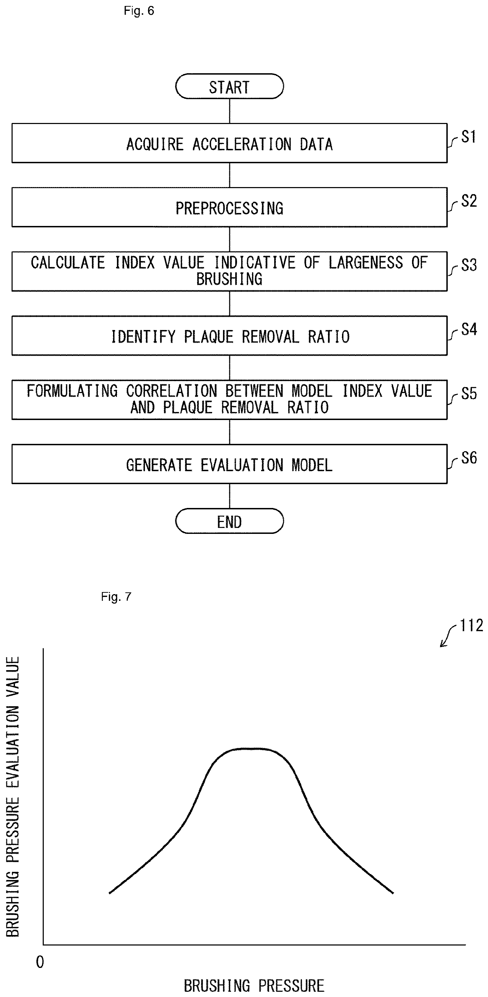

Fig. 6 is a flowchart illustrating an example of processing for generating the evaluation model 111. As illustrated in Fig. 6, in step S1, the information acquisition section 401 acquires acceleration data measured when each test subject performs brushing. The acceleration data may include acceleration data for each of the plurality of times of brushing performed by a single test subject.

In step S2, the index value calculating section 402 carries out, as preprocessing, the removal of the gravitational component from the acceleration data acquired in step S1. In step S3, the index value calculating section 402 uses the acceleration data which has undergone the preprocessing in S2, to calculate an index value indicative of the largeness of brushing. The index value is calculated for each of the plurality of test subjects.

In step S4, the removal ratio identifying section 403 identifies respective plaque removal ratios which corresponds to the index values calculated in S3. As described above, the plaque removal ratio may be inputted by a user, or original data for calculating the plaque removal ratio may be inputted so that the removal ratio identifying section 403 calculates the plaque removal ratio.

In step S5 (formulation step), the formulation section 404 formulates a correlation between the index values calculated in S3 and the plaque removal ratios identified in S4. As described above, the formulation section 404 may formulate the correlation by, for example, approximation with a quadratic function.

In step S6 (model generation step), the model generation section 405 generates the evaluation model 111 for calculating an evaluation value for a brushing technique from the index value calculated during tooth brushing to be evaluated, on the basis of the function obtained by the formulation in step S5. The model generation section 405 stores the generated evaluation model 111 in the storage section 41.

The functions of the model generation device 4 can be implemented by a system constituted by a plurality of information processing devices. Thus, the sections carrying out the steps illustrated in Fig. 6 are not limited to the above example. That is, the steps illustrated in Fig. 6 can be carried out by a single information processing device, or can be carried out by the plurality of information processing devices which share the processes of said steps thereamong.

As described above, the method for generating the evaluation model 111 in accordance with the present embodiment is a method which is for generating the evaluation model 111 and which is carried out by one or more information processing devices, and includes: (1) a formulation step (step S5) of formulating a correlation between an index value indicative of largeness of brushing and a plaque removal ratio for the brushing, the index value being calculated from acceleration data of a toothbrush in tooth brushing; and (2) a model generation step (step S6) of generating, on the basis of the function obtained by the formulating, the evaluation model 111 for calculating an evaluation value for a brushing technique from the index value calculated during tooth brushing to be evaluated. This makes it possible to generate the evaluation model 111 capable of calculating, from an index value indicative of the largeness of brushing of a subject, an evaluation value for a brushing technique of the subject. By using the evaluation model 111 thus generated, it is possible to evaluate a brushing technique of a subject for removing plaque.

Further, in the formulation step (step S5), by formulating the correlation between the index values and the plaque removal ratios that are calculated by compartmentalizing the surface of each tooth into a plurality of areas, it is possible to calculate an evaluation value that has reflected therein whether plaque has successfully been removed in every corner of each tooth.

(Configuration of evaluation device)

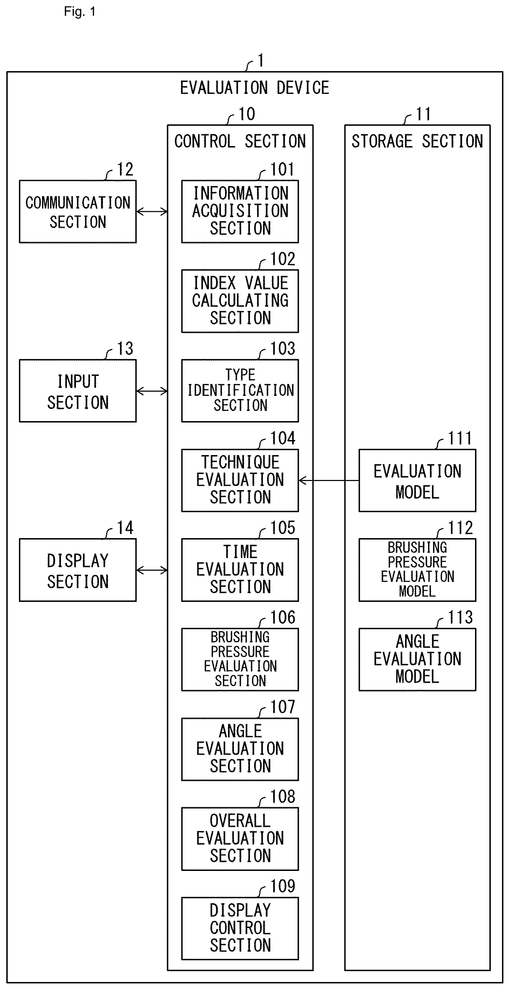

The configuration of the evaluation device 1 is described here on the basis of Fig. 1. Fig. 1 is a block diagram illustrating an example configuration of the main part of the evaluation device 1. The evaluation device 1 is a device for calculating an evaluation value for a brushing technique. As illustrated in Fig. 1, an evaluation device 1 includes a control section 10, a storage section 11, a communication section 12, an input section 13, and a display section 14.

The control section 10 performs overall control of the sections of the evaluation device 1. As an example, the control section 10 may be a CPU. The control section 10 retrieves a control program, which is software stored in the storage section **11,** and loads the control program into a memory such as a RAM to execute various functions. The configuration of the control section 10 will be described later in detail.

The storage section 11 stores various kinds of data to be used by the evaluation device 1. The storage section 11 may store in advance the evaluation model 111 for each type of the toothbrush 2, a brushing pressure evaluation model 112, and an angle evaluation model 113. The brushing pressure evaluation model 112 and the angle evaluation model 113 are described later in detail.

The communication section 12 is for communicating with other devices (e.g., the toothbrush 2 and the model generation device 4). The input section 13 receives inputs of the various kinds of data to the evaluation device 1. The input section 13 receives, for example, an input, by the subject, of the type of toothbrush 2. The toothbrush 2 may detect the type of brush portion of its own and notify the evaluation device 1 of the type.

The display section 14 displays information generated on the basis of the display information acquired from the display control section 109, which will be described later. The display section 14 need not be included in the evaluation device 1, and may be in such a form as to be provided outside the evaluation device 1 and connected to the evaluation device 1.

[Configuration of control section]

The control section 10 includes an information acquisition section 101, an index value calculating section 102, a type identification section 103, a technique evaluation section 104, a time evaluation section 105, a brushing pressure evaluation section 106, an angle evaluation section 107, an overall evaluation section 108, and a display control section 109.

The information acquisition section 101 acquires the various kinds of data necessary for the calculation of an evaluation value for the brushing technique. These pieces of data include acceleration data and brushing pressure data regarding the brushing of a subject.

The index value calculating section 102 calculates an index value indicative of the largeness of brushing from acceleration data of the toothbrush 2 when a subject brushes his or her teeth. The index value calculating section 102 may calculate the index value by the same method that is used by the index value calculating section 402 of the model generation device 4.

The type identification section 103 identifies the type of toothbrush 2 used by the subject. For example, the type of toothbrush 2 may be inputted by a subject or the like, and in this case, the type identification section 103 identifies the type of toothbrush 2 on the basis of the content of the input to the input section 13 or the communication section 12. Although it is not essential that the control section 10 includes the type identification section 103 in the present embodiment, the control section 10 preferably includes the type identification section 103.

The technique evaluation section 104 uses the evaluation model 111 to calculate an evaluation value for a brushing technique of a subject from the index value calculated by the index value calculating section 102. In a case where the evaluation model 111 according to the type of toothbrush 2 is usable, the technique evaluation section 104 calculates the evaluation value, with use of the evaluation model 111 corresponding to the result of identification by the type identification section 103, among a plurality of evaluation models 111 which are generated in advance for respective types of toothbrushes.

This makes it possible to calculate an evaluation value with use of the evaluation model 111 corresponding to the type of toothbrush used by the subject. It is therefore possible to calculate a reasonable evaluation value that matches the type of toothbrush 2 used.

For example, assume that a subject brushes his or her teeth with the toothbrush 2 that corresponds to the evaluation model 111A illustrated in 4002 of Fig. 4. In this case, when the index value calculated by the index value calculating section 102 is 150, the evaluation value calculated by the technique evaluation section 104 is a score of 100 points on the basis of the evaluation model 111A.

The technique evaluation section 104 can calculate an evaluation value in real time during brushing, or can calculate an evaluation value for the entire brushing after the brushing. In a case of calculating an evaluation value in real time during brushing, the index value calculating section 102 calculates the index value in real time from time-series acceleration data measured during the brushing. The technique evaluation section 104 inputs, to the evaluation model 111, an index value calculated in real time by the index value calculating section 102, to calculate an evaluation value for a brushing technique. On the other hand, in a case of calculating an evaluation value after brushing, the technique evaluation section 104 may calculate an evaluation value with use of a representative value (e.g., an average value, a maximum value, etc.) of time-series index values calculated, as needed, by the index value calculating section 102 from the acceleration data measured during the brushing period.

The technique evaluation section 104 can calculate an evaluation value for the full mouth, or can calculate an evaluation value for each area in the mouth. In a case of calculating an evaluation value for each area, the technique evaluation section 104 may calculate the evaluation value from a representative value of the time-series index values calculated by the index value calculating section 102 from the acceleration data measured during the brushing period in the area to be evaluated.

For example, the technique evaluation section 104 may correct the evaluation value on the basis of, for example, a portion of the tooth surface on which the brush portion of the toothbrush 2 is being placed.

The time evaluation section 105 calculates an evaluation value indicative of evaluation of brushing time of a subject. For example, the time evaluation section 105 measures the brushing time in the full mouth and evaluates the brushing time on the basis of the brushing time and the brushing reference time for the full mouth which is set in advance. For example, in a case where the brushing reference time is 2 minutes and the brushing time is 1 minute, the time evaluation section 105 may calculate the evaluation value as follows: evaluation value = 1 minute / 2 minutes x 100 = 50. Providing the time evaluation section 105 enables the evaluation device 1 to carry out overall brushing evaluation in consideration of the brushing time.

The time evaluation section 105 may calculate not only brushing time in the full mouth but also an evaluation value indicative of evaluation of brushing time in each of the areas into which the mouth is compartmentalized. Further, besides a setting of an area which includes a plurality of teeth, the time evaluation section 105 may evaluate brushing time with an individual tooth regarded as a unit area. In this case, reference time may be set per area. In a case of evaluating brushing time for each area, the technique evaluation section 104 may calculate the evaluation value for each area as well. Although it is not essential that the control section 10 includes the time evaluation section 105 in the present embodiment, the control section 10 preferably includes the time evaluation section 105.

The brushing pressure evaluation section 106 calculates an evaluation value indicative of evaluation of the brushing pressure on the teeth when a subject brushes his or her teeth. For example, the brushing pressure evaluation section 106 may use the brushing pressure evaluation model 112 to calculate said evaluation value. The brushing pressure evaluation model 112 may be a function that returns a high evaluation value for a brushing pressure in a proper range, and returns a lower evaluation value when the brushing pressure deviates from the proper range to a greater degree.

**EP 4 643 710 A1**

Fig. 7 is a diagram illustrating an example of the brushing pressure evaluation model 112. The brushing pressure evaluation model 112 illustrated in Fig. 7 is convex upward, and when the optimum brushing pressure is inputted to this brushing pressure evaluation model 112, the maximum evaluation value is outputted. Further, when an inputted brushing pressure deviates from the optimum value to a greater degree, the evaluation value outputted from the brushing pressure evaluation model 112 is smaller. The brushing pressure evaluation model 112 may be appropriately set on the basis of the viewpoint of dental hygiene and the like.

The brushing pressure in the brushing of a subject can be measured by, for example, providing the toothbrush 2 with a pressure sensor for measuring the brushing pressure. The brushing pressure evaluation section 106 can then acquire the measured brushing pressure and input the same to the brushing pressure evaluation model 112, to calculate an evaluation value for said brushing pressure. For example, in a case where the measured value of the brushing pressure is transmitted from the toothbrush 2 to the evaluation device 1 at predetermined intervals, the brushing pressure evaluation section 106 can also calculate an evaluation value at predetermined intervals. Although it is not essential that the control section 10 includes the brushing pressure evaluation section 106 in the present embodiment, the control section 10 preferably includes the brushing pressure evaluation section 106.

The angle evaluation section 107 calculates an angle evaluation value indicative of evaluation of the angle of the toothbrush 2 when a subject brushes his or her teeth. For example, the angle evaluation section 107 may use the angle evaluation model 113 to calculate said evaluation value. The angle evaluation model 113 may be a function that returns a high evaluation value for the angle of the toothbrush 2 in a proper range, and returns a lower evaluation value when the angle of the toothbrush 2 deviates from the proper range to a greater degree.

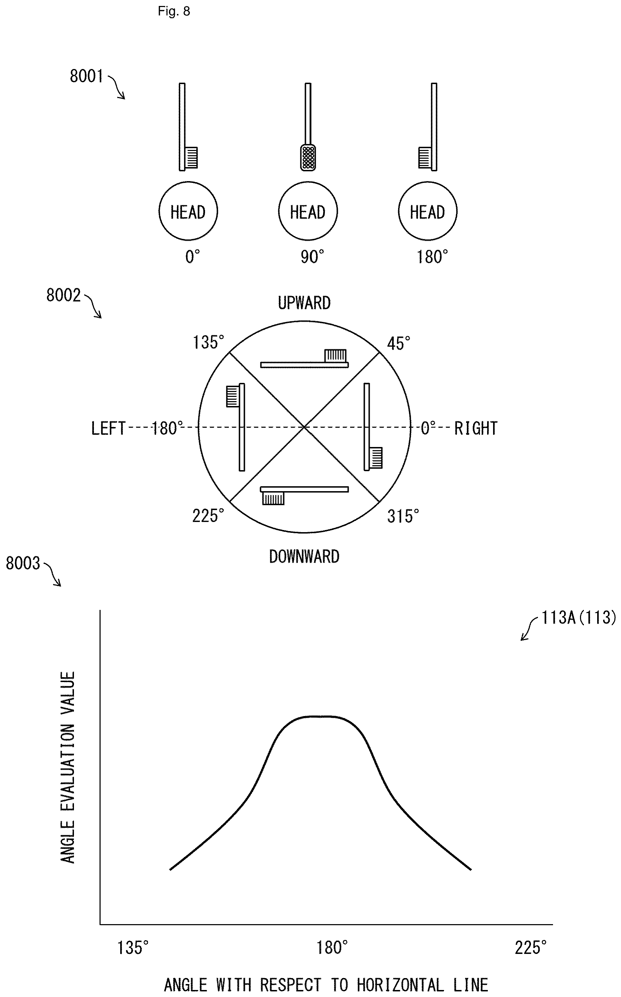

The reference sign 8003 of Fig. 8 indicates an angle evaluation model 113A, which is an example of the angle evaluation model 113. Further, the reference sign 8001 of Fig. 8 is a diagram for explaining the angle of a toothbrush, and the reference sign 8002 is a diagram illustrating an example of an optimum angle of the toothbrush for each of the orientations of the brush portion of the toothbrush. Note that the "head" in 8001 indicates the view, seen from directly above, of the head of a brushing person.

As illustrated in 8001, the angle of a toothbrush is defined: as 0° when the brush portion (bristles) faces the right side in the horizontal direction as viewed by the brushing person; as 90° when the brush portion (bristles) faces upward in the vertical direction as viewed by the brushing person; and as 180° when the brush portion (bristles) faces the left side in the horizontal direction as viewed by the brushing person. In this definition, regardless of the angle of the toothbrush, the brush portion of the toothbrush is positioned on the near side of the brushing person and the grip portion of the toothbrush is positioned on the far side of the brushing person. The angle of the toothbrush translates to the orientation of the brush portion.

The proper angle of the toothbrush varies according to the area being brushed and varies also according to the brushing method. For example, in a case where a brushing person brushes an area on the right upper buccal side by the scrubbing method, by which the bristles are placed at an angle of 90° with respect to the tooth surface, the bristles face to the left as viewed by the brushing person. In this situation, when the angle of the toothbrush is generally in the range of 135° to 225°, the bristles are easily placed at an angle of 90° with respect to the tooth surface.

As above, when the brushing method is determined, it is possible to determine, for each area to be brushed, the orientation of the bristles and a proper range of toothbrush angles. For example, in a case where the brushing person brushes his or her teeth by the scrubbing method, the proper angle of a toothbrush may be determined: as from 0° to 45° and from 315° to 360° when the bristles face to the right; as from 45° to 135° when the bristles face upward; as from 135° to 225° when the bristles face to the left; and as from 225° to 315° when the bristles face downward, as illustrated in 8002 of Fig. 8.

A function may then be created in which the evaluation value is the maximum at and around the center position in each range and the evaluation value is lower when the distance from the center position is greater, and this function may be used as the angle evaluation model 113. In this case, the angle evaluation model 113 is generated for each area to be brushed (in other words, for each orientation of the bristles during brushing).

The angle evaluation model 113A illustrated in 8003 of Fig. 8 is the evaluation model for evaluating the angle of the toothbrush 2 in the area where the bristles face to the left during brushing performed by the scrubbing method. With the angle evaluation model 113A, the evaluation value is the maximum when the angle of the toothbrush 2 is around 180°, and the evaluation value is lower when the angle is further away from 180°.

The method for identifying the inclination angle and the brushing area is not particularly limited. For example, the angle evaluation section 107 can calculate the inclination angle of the toothbrush 2 by analyzing triaxial acceleration data measured by the acceleration sensor included in the toothbrush 2. Further, as an example, when the subject performs brushing in the situation where, for example, guide information for designating a brushing area is displayed, the angle evaluation section 107 can identify, as the brushing area, the area designated in the guide information.

For example, the angle evaluation section 107 may calculate an evaluation value for the angle of the toothbrush 2 at predetermined intervals. The angle of the toothbrush 2 is not limited to the angles illustrated in 8001 of Fig. 8, and may be the angle of the brush portion with respect to the tooth surface.

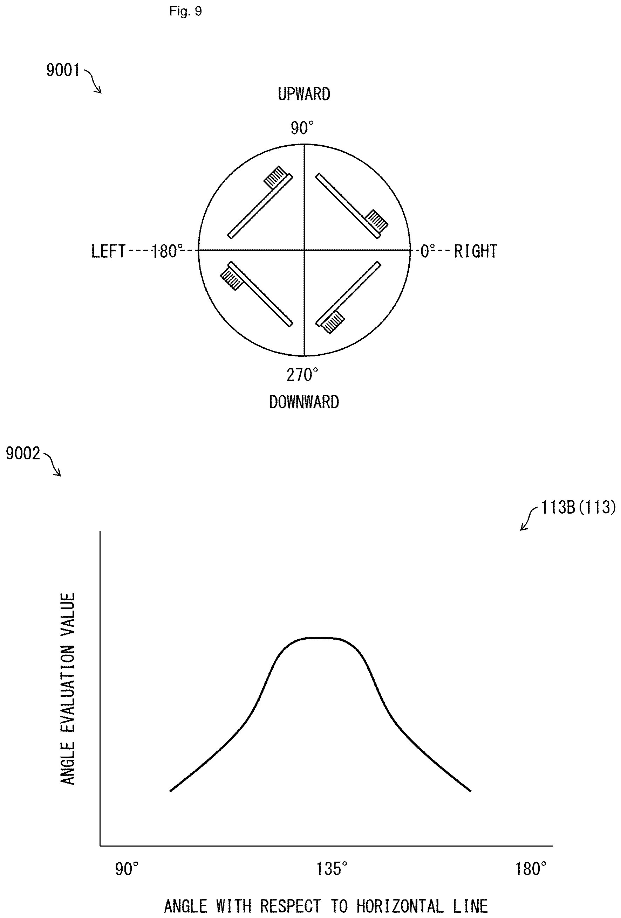

As above, the proper angle of the toothbrush varies according to the brushing method. Fig. 9 is a diagram illustrating an example of the angle evaluation model to be applied during brushing performed by the Bass method. The Bass method is the brushing method in which the toothbrush 2 is placed at an angle of 45° with respect to the tooth surface. The definition of the angle is the same as that in Fig. 8.

Also in the case of the Bass method, the angle evaluation model 113 may be generated for each brushing area (in other words, for each orientation of the bristles during brushing). For example, the proper angle of a toothbrush may be determined: as from 0° to 90° when the bristles face in the directions from the right-hand direction to the upward direction; as from 90° to 180° when the bristles face in the directions from the upward direction to the left-hand direction; as from 180° to 270° when the bristles face in the directions from the left-hand direction to the downward direction; and as from 270° to 360° when the bristles face in the directions from the downward direction to the right-hand direction, as illustrated in 9001 of Fig. 9.

A function may then be created in which the evaluation value is the maximum at and around the center position in each range and the evaluation value is lower when the distance from the center position is greater, and this function may be used as the angle evaluation model 113. An angle evaluation model 113B illustrated in 9002 of Fig. 9 is the evaluation model for evaluating the angle of the toothbrush 2 in the area where the bristles face in the directions from the upward direction to the left-hand direction during brushing performed by the Bass method. With the angle evaluation model 113B, the evaluation value is the maximum when the angle of the toothbrush 2 is around 135°, and the evaluation value is lower when the angle is further away from 135°.

The evaluation of the angle is not limited to the above-described scrubbing method and the Bass method, and can be carried out by various brushing methods. For example, the angle evaluation models 113 depending on brushing methods may be prepared in advance. In this case, the angle evaluation section 107 can properly carry out the angle evaluation with use of the angle evaluation model 113 corresponding to the brushing method applied by a subject. Although it is not essential that the control section 10 includes the angle evaluation section 107 in the present embodiment, the control section 10 preferably includes the angle evaluation section 107.

The overall evaluation section 108 calculates an overall evaluation value for brushing by the subject on a basis of the evaluation value calculated by the technique evaluation section 104 and the evaluation value calculated by the time evaluation section 105. This makes it possible to carry out evaluation in consideration of not only the index value but also the brushing time.

For example, the overall evaluation section 108 may calculate, as the overall evaluation value, the sum or the average value of the evaluation value calculated by the technique evaluation section 104 and the evaluation value calculated by the time evaluation section 105.

The overall evaluation section 108 may calculate the overall evaluation value for brushing by the subject, on the basis of the evaluation value calculated by the technique evaluation section 104, the evaluation value calculated by the time evaluation section 105, the evaluation value calculated by the brushing pressure evaluation section 106, and the evaluation value calculated by the angle evaluation section 107. This makes it possible to carry out evaluation also in consideration of the brushing pressure and the angle of the toothbrush 2. In this case, for example, the overall evaluation section 108 may calculate, as the overall evaluation value, the sum or the average value of the evaluation value calculated by the technique evaluation section 104, the evaluation value calculated by the time evaluation section 105, the evaluation value evaluated by the brushing pressure evaluation section 106, and the evaluation value of the angle evaluation section 107. Although it is not essential that the control section 10 includes the overall evaluation section 108 in the present embodiment, the control section 10 preferably includes the overall evaluation section 108.

The display control section 109 displays, on the display section 14, each of the evaluation values calculated with use of the evaluation model 111. In this display, the display control section 109 may also display, on the display section 14, each evaluation value and various kinds of information related to each evaluation value. The display control section 109 may display each evaluation value indicative of evaluation of the entire brushing after brushing, or may display each evaluation value in real time during the brushing. Although it is not essential that the control section 10 includes the display control section 109 in the present embodiment, the control section 10 preferably includes the display control section 109.

As described above, the evaluation device 1 includes: (1) an index value calculating section 102 for calculating an index value indicative of the largeness of brushing from acceleration data of the toothbrush 2 when a subject brushes his or her teeth; (2) a technique evaluation section 104 for calculating, with use of an evaluation model 111 for a brushing technique, an evaluation value for a brushing technique of the subject from the index value calculated by the index value calculating section 102, the evaluation model 111 being generated on a basis of a correlation between the index value and a plaque removal ratio. As above, in the present invention, it is possible to evaluate a brushing technique by using the evaluation model 111, which is for a brushing technique and which is generated on the basis of the correlation between the index value indicative of the largeness of brushing and the plaque removal ratio.

(Processing flow (evaluation value calculation))

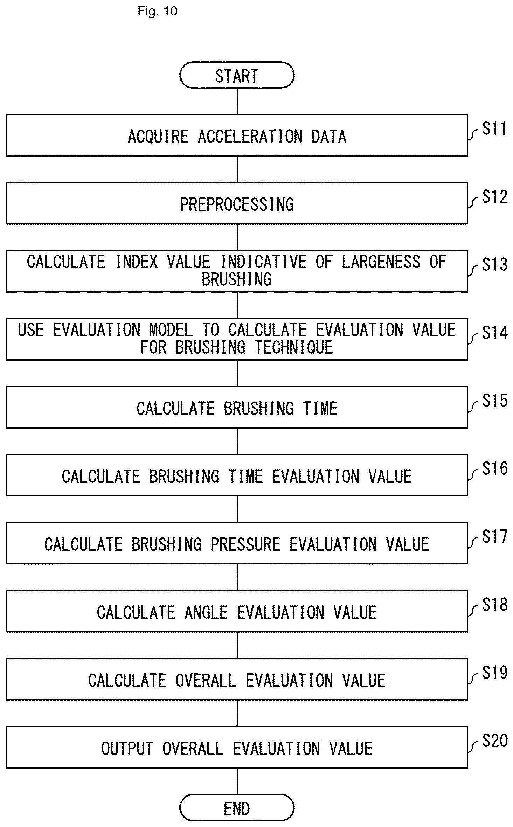

The flow of processing (brushing technique evaluation method) by which the evaluation device 1 calculates an evaluation value for a brushing technique is described here on the basis of Fig. 10. Fig. 10 is a flowchart illustrating an example processing for calculating an evaluation value for a brushing technique. In the present processing, the case of displaying the evaluation value after brushing is described. Further, although the calculation of the evaluation value for the brushing time, the calculation of the evaluation value for the brushing pressure, the calculation of the evaluation value for the angle, and the calculation of the overall evaluation value are also illustrated in Fig. 10, these processes are not essential for the calculation of the evaluation value for the brushing technique.

In step S11, the information acquisition section 101 acquires acceleration data during tooth brushing of a subject. For example, in a case where the subject brushes his or her teeth for 3 minutes, time-series acceleration data measured by the toothbrush 2 for the 3 minutes is acquired. In step S12, the index value calculating section 102 carries out the preprocessing for removing the gravitational component from the acceleration data acquired in step S11.

Next, in step S13, the index value calculating section 102 uses the acceleration data from which the gravitational component has been removed in step S12, to calculate an index value indicative of the largeness of brushing. In step S14, the technique evaluation section 104 uses the evaluation model 111 to calculate an evaluation value for the brushing technique on the basis of the index value calculated in step S13. For example, in a case of carrying out evaluation of brushing of the full mouth, the index value calculating section 102 may calculate the evaluation value with use of the representative value (e.g., average value, maximum value, etc.) of the time-series index values calculated in step S13.

In step S16, the time evaluation section 105 calculates an evaluation value indicative of evaluation of the brushing time. In step S17, the brushing pressure evaluation section 106 calculates an evaluation value for the brushing pressure. In step S18, the angle evaluation section 107 calculates an evaluation value for the angle of the toothbrush 2. The same period and area to be evaluated are shared by steps S14 and 16 to 18. For example, in a case of evaluating brushing of the full mouth in the entire period, the evaluation value for brushing of the full mouth in the entire period is calculated in any of the steps S14 and 16 to 18.

In step S19, the overall evaluation section 108 calculates, as the overall evaluation value, the average value of the evaluation value calculated by the technique evaluation section 104, the evaluation value calculated by the time evaluation section 105, the evaluation value calculated by the brushing pressure evaluation section 106, and the evaluation value calculated by the angle evaluation section 107, and outputs the same to the display control section 109. The overall evaluation section 108 may use the sum of these evaluation values as the overall evaluation value. In step S20, the display control section 109 displays the evaluation result calculated in step S19 on the display section 14.

The functions of the evaluation device 1 can be implemented by a system constituted by a plurality of information processing devices, and the devices constituting the evaluation system 100 may be changed as appropriate. Thus, the sections carrying out the steps illustrated in Fig. 10 are not limited to the above example. That is, the steps illustrated in Fig. 10 can be carried out by a single information processing device, or can be carried out by the plurality of information processing devices which share the processes of said steps thereamong.

As above, the brushing evaluation method in accordance with the present embodiment is (1) an evaluation method carried out by one or more information processing devices, and includes: an index value calculating step (step S13) of calculating an index value indicative of the largeness of brushing from acceleration data of a toothbrush 2 when a subject brushes his or her teeth; (2) a technique evaluation step (step S14) of calculating, with use of an evaluation model 111 for a brushing technique, an evaluation value for a brushing technique of the subject from the index value calculated in the index value calculating step, the evaluation model 111 being generated on the basis of a correlation between the index value and a plaque removal ratio. It is therefore possible to evaluate a brushing technique for removing plaque.

[Software implementation example]

The functions of the evaluation device 1 and the model generation device 4 (hereinafter, referred to as a "device") can be implemented via a program (evaluation program/evaluation model generation program) which is for causing a computer to function as the device and which is for causing a computer to function as the control blocks (in particular, the sections included in the control section (10, 40)).

In this case, the device includes, as hardware for executing the program, a computer including at least one control device (e.g., a processor) and at least one storage device (e.g., a memory). The at least one control device and the at least one storage device execute the program, so that the functions described in the above embodiments are implemented.

The program may be recorded in one or more non-transitory computer-readable recording media. The recording media may be included in the device, or need not be included in the device. In the latter case, the program may be supplied to the device via any wired or wireless transmission medium.

Furthermore, some or all of the functions of the control blocks can also be implemented by a logic circuit. For example, an integrated circuit in which logic circuits that functions as the control blocks are formed is also within the scope of the present invention. In addition, the functions of the control blocks can also be implemented by, for example, a quantum computer.

The processes described in the above embodiments may be carried out by artificial intelligence (AI). In this case, the AI may operate in the control device, or may operate in another device (e.g., an edge computer or a cloud server).

The present invention is not limited to the embodiments above, and can be altered by a skilled person in the art within the scope of the claims. Any embodiment derived by combining, as appropriate, technical means disclosed in the embodiments is also within the scope of the present invention.

Reference Signs List

1: Evaluation device
102: Index value calculating section
103: Type identification section
104: Technique evaluation section
105: Time evaluation section
108: Overall evaluation section
**111:** Evaluation model
2: Toothbrush

**Claims**

1. An evaluation device, comprising:

    an index value calculating section for calculating an index value indicative of largeness of brushing from acceleration data of a toothbrush when a subject brushes his or her teeth; and
    a technique evaluation section for calculating, with use of an evaluation model for a brushing technique, an evaluation value for a brushing technique of the subject from the index value calculated by the index value calculating section, the evaluation model being generated on a basis of a correlation between the index value and a plaque removal ratio.

2. The evaluation device as set forth in claim 1, further comprising

    a type identification section for identifying a type of toothbrush used by the subject,
    wherein the technique evaluation section calculates the evaluation value with use of, among a plurality of evaluation models which each are the evaluation model and which are generated in advance for respective types of toothbrushes, an evaluation model corresponding to a result of identification by the type identification section.

3. The evaluation device as set forth in claim 1 or 2, further comprising:

    a time evaluation section for calculating an evaluation value indicative of evaluation of time of brushing by the subject; and
    an overall evaluation section for calculating an overall evaluation value for the brushing by the subject on a basis of the evaluation value calculated by the technique evaluation section and the evaluation value calculated by the time evaluation section.

4. An evaluation method carried out by one or more information processing devices, the evaluation method comprising:

    an index value calculating step of calculating an index value indicative of largeness of brushing from acceleration data of a toothbrush when a subject brushes his or her teeth; and
    a technique evaluation step of calculating, with use of an evaluation model for a brushing technique, an evaluation value for a brushing technique of the subject from the index value calculated in the index value calculating step, the evaluation model being generated on a basis of a correlation between the index value and a plaque removal ratio.

5. An evaluation model generation method carried out by one or more information processing devices, the evaluation model generation method comprising:

a formulation step of formulating a correlation between an index value indicative of largeness of brushing and a plaque removal ratio for the brushing, the index value being calculated from acceleration data of a toothbrush in tooth brushing; and

a model generation step of generating, on a basis of a function obtained by the formulating, an evaluation model for calculating an evaluation value for a brushing technique from the index value.

6.  The evaluation model generation method as set forth in claim 5,
wherein in the formulation step, the correlation between the index value and the plaque removal ratio calculated based on compartmentalization of a surface of each tooth into a plurality of areas is formulated.

7.  An evaluation program for causing a computer to function as the evaluation device as set forth in claim 1, said evaluation program causing the computer to function as the index value calculating section and the technique evaluation section.

Fig. 1

EVALUATION DEVICE ⌐1

CONTROL SECTION ⌐10

STORAGE SECTION ⌐11

COMMUNICATION SECTION ⌐12

INFORMATION ACQUISITION SECTION ⌐101

INDEX VALUE CALCULATING SECTION ⌐102

INPUT SECTION ⌐13

TYPE IDENTIFICATION SECTION ⌐103

TECHNIQUE EVALUATION SECTION ⌐104

EVALUATION MODEL ⌐111

DISPLAY SECTION ⌐14

TIME EVALUATION SECTION ⌐105

BRUSHING PRESSURE EVALUATION MODEL ⌐112

BRUSHING PRESSURE EVALUATION SECTION ⌐106

ANGLE EVALUATION MODEL ⌐113

ANGLE EVALUATION SECTION ⌐107

OVERALL EVALUATION SECTION ⌐108

DISPLAY CONTROL SECTION ⌐109

Fig. 2

100

MODEL GENERATION
DEVICE
4

2

ACCELERATION DATA
DURING BRUSHING

1

OVERALL
EVALUATION
VALUE
7 9

V3 EVALUATION
MODEL

BREAKDOWN
TECHNIQUE:86
TIME:72

V1
V2

14

Fig. 3

MODEL GENERATION DEVICE — 4

CONTROL SECTION — 40

STORAGE SECTION — 41

COMMUNICATION SECTION — 42

INFORMATION ACQUISITION SECTION — 401

INDEX VALUE CALCULATING SECTION — 402

INPUT SECTION — 43

REMOVAL RATIO IDENTIFYING SECTION — 403

FORMULATION SECTION — 404

MODEL GENERATION SECTION — 405

EVALUATION MODEL — 111

Fig. 4

4001

4002

Fig. 5

5001

5002

Fig. 6

```
                    ┌─────────────┐
                    │    START    │
                    └─────────────┘
                          │
   ┌──────────────────────────────────────────────┐
   │          ACQUIRE ACCELERATION DATA            │  ⌒S1
   └──────────────────────────────────────────────┘
                          │
   ┌──────────────────────────────────────────────┐
   │                 PREPROCESSING                  │  ⌒S2
   └──────────────────────────────────────────────┘
                          │
   ┌──────────────────────────────────────────────┐
   │ CALCULATE INDEX VALUE INDICATIVE OF LARGENESS OF │  ⌒S3
   │                   BRUSHING                     │
   └──────────────────────────────────────────────┘
                          │
   ┌──────────────────────────────────────────────┐
   │            IDENTIFY PLAQUE REMOVAL RATIO        │  ⌒S4
   └──────────────────────────────────────────────┘
                          │
   ┌──────────────────────────────────────────────┐
   │ FORMULATING CORRELATION BETWEEN MODEL INDEX VALUE │  ⌒S5
   │            AND PLAQUE REMOVAL RATIO            │
   └──────────────────────────────────────────────┘
                          │
   ┌──────────────────────────────────────────────┐
   │             GENERATE EVALUATION MODEL          │  ⌒S6
   └──────────────────────────────────────────────┘
                          │
                    ┌─────────────┐
                    │     END     │
                    └─────────────┘
```

Fig. 7

⌒112

BRUSHING PRESSURE EVALUATION VALUE

0

BRUSHING PRESSURE

Fig. 8

8001

HEAD
0°

HEAD
90°

HEAD
180°

8002

UPWARD

135°          45°

LEFT ---180°          0°--- RIGHT

225°          315°

DOWNWARD

8003

113A (113)

ANGLE EVALUATION VALUE

135°          180°          225°

ANGLE WITH RESPECT TO HORIZONTAL LINE

Fig. 9

9001

UPWARD

90°

LEFT---180°---0°---RIGHT

270°

DOWNWARD

9002

113B (113)

ANGLE EVALUATION VALUE

90°    135°    180°

ANGLE WITH RESPECT TO HORIZONTAL LINE

Fig. 10

START

ACQUIRE ACCELERATION DATA — S11

PREPROCESSING — S12

CALCULATE INDEX VALUE INDICATIVE OF LARGENESS OF BRUSHING — S13

USE EVALUATION MODEL TO CALCULATE EVALUATION VALUE FOR BRUSHING TECHNIQUE — S14

CALCULATE BRUSHING TIME — S15

CALCULATE BRUSHING TIME EVALUATION VALUE — S16

CALCULATE BRUSHING PRESSURE EVALUATION VALUE — S17

CALCULATE ANGLE EVALUATION VALUE — S18

CALCULATE OVERALL EVALUATION VALUE — S19

OUTPUT OVERALL EVALUATION VALUE — S20

END

**EP 4 643 710 A1**

## INTERNATIONAL SEARCH REPORT

| International application No. |
|---|
| **PCT/JP2023/043620** |

| A. | CLASSIFICATION OF SUBJECT MATTER |
|---|---|

*A46B 15/00*(2006.01)i; *A61C 19/06*(2006.01)i
FI:   A46B15/00 K; A61C19/06 A

According to International Patent Classification (IPC) or to both national classification and IPC

| B. | FIELDS SEARCHED |
|---|---|

Minimum documentation searched (classification system followed by classification symbols)

A46B15/00; A61C19/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | EP 3922134 A1 (KONINKLIJKE PHILIPS N. V.) 15 December 2021 (2021-12-15) paragraphs [0006]-[0153], fig. 1, 3, 10 | 1-7 |
| Y | paragraphs [0006]-[0153], fig. 1, 3, 10 | 2-3, 6 |
| X | JP 2019-69252 A (SUNSTAR INC.) 09 May 2019 (2019-05-09) paragraphs [0071]-[0241], fig. 1, 10 | 1, 3-5, 7 |
| Y | paragraphs [0071]-[0241], fig. 1, 10 | 2-3, 6 |
| A | JP 2019-30578 A (INCORPORATED NATIONAL UNIV. IWATE UNIVERSITY) 28 February 2019 (2019-02-28) | 1-7 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 January 2024** | **13 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

24

## INTERNATIONAL SEARCH REPORT
### Information on patent family members

International application No.

**PCT/JP2023/043620**

| Patent document cited in search report | | | Publication date (day/month/year) | Patent family member(s) | | | Publication date (day/month/year) |
|---|---|---|---|---|---|---|---|
| EP | 3922134 | A1 | 15 December 2021 | US | 2023/0240438 | A1 | |
| | | | | WO | 2021/249898 | A1 | |
| | | | | CN | 115835799 | A | |
| JP | 2019-69252 | A | 09 May 2019 | US | 2017/0318954 | A1 | |
| | | | | paragraphs [0104]-[0274], fig. 1, 10 | | | |
| | | | | WO | 2016/104442 | A1 | |
| | | | | EP | 3238565 | A1 | |
| | | | | CN | 107105888 | A | |
| JP | 2019-30578 | A | 28 February 2019 | (Family: none) | | | |

Form PCT/ISA/210 (patent family annex) (July 2022)

**EP 4 643 710 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013536018 W